## Europäisches Patentamt
## European Patent Office
## Office européen des brevets

(19)

(11) Veröffentlichungsnummer: **0 143 926**

**A2**

(12) # EUROPÄISCHE PATENTANMELDUNG

(21) Anmeldenummer: **84111166.9**

(22) Anmeldetag: **19.09.84**

(51) Int. Cl.⁴: **B 29 B 7/76**
     **B 29 B 7/74**

(30) Priorität: **23.09.83 DE 3334375**

(43) Veröffentlichungstag der Anmeldung:
     **12.06.85 Patentblatt 85/24**

(84) Benannte Vertragsstaaten:
     **BE DE FR GB IT NL SE**

(71) Anmelder: **Elastogran Maschinenbau GmbH**

     **D-8021 Strasslach(DE)**

(72) Erfinder: **Endress, Johann**
     **Rolf-Pineggerstrasse 6**
     **D-8000 Muenchen 21(DE)**

(72) Erfinder: **Riesinger, Helmut**
     **Grafstrasse 2**
     **D-8025 Unterhaching(DE)**

(72) Erfinder: **Schlueter, Klaus**
     **Windeckstrasse 1 c**
     **D-8000 Muenchen 70(DE)**

(72) Erfinder: **Taubenmann, Peter**
     **Strindbergstrasse 1**
     **D-8000 Muenchen 60(DE)**

(72) Erfinder: **Thiele, Heino, Dr.**
     **An der Froschlache 23**
     **D-6700 Ludwigshafen(DE)**

(74) Vertreter: **Springer, Hans Jörg, Dr. et al,**
     **Carl-Bosch-Strasse 38**
     **D-6700 Ludwigshafen(DE)**

(54) **Vorrichtung zum Mischen von midestens zwei chemisch reaktionsfähigen Kunststoffkomponenten.**

(57) Die Vorrichtung zum Mischen von chemisch reaktionsfähigen Kunststoffkomponenten, insbesondere polyurethanbildende Komponenten, sorgt dafür, daß der Druck der Kunststoffkomponenten konstant gehalten wird. Dieses geshieht durch eine Einrichtung, die eine konstante Kraft erzeugt bzw. zur Verfügung stellt, die dann im Sinne der Konstanthaltung des Druckes in jeder Komponentenleitung eingesetzt wird. Hierdurch werden Druckschwankungen, die beim Mischen insbesondere dann auftreten können, wenn Ventile geöffnet und geschlossen werden, kompensiert. Beispielsweise können dann starke Druckschwankungen auftreten, wenn in einer Mischkammer gemischt wird, die mit einem querschnittsgleichen Ausstoßkolben ausgerüstet ist, der die Eintrittsöffnungen in die Mischkammer überfährt und gegebenenfalls noch mit Rücklaufnuten für jede Komponente ausgerüstet ist. Diese Druckschwankungen werden verhindert, indem beispielsweise auf die Ventilkörper der Einspritzdüsen oder Einspritzventile so eingewirkt wird, daß der Druck beim Eintritt in die Mischkammer immer konstant ist. Bereits im Rücklauf vor jeder Mischung wird für einen konstanten Druck in den Komponentenleitungen gesorgt.

**0143926**

Vorrichtung zum Mischen von mindestens zwei chemisch reaktionsfähigen
Kunststoffkomponenten

Die Erfindung betrifft eine Vorrichtung zum Mischen von mindestens zwei
reaktionsfähigen Kunststoffkomponenten, insbesondere polyurethanbildende
Komponenten, mit einer Mischkammer, die Eintrittsöffnungen für die einzelnen Kunststoffkomponenten und eine Austrittsöffnung für das Komponentengemisch aufweist, wobei die Komponenten bei verschlossenen Eintrittsöffnungen in einem Kreislauf (Rücklauf) zurück zu Komponentenbehältern strömen.

Bei den Vorrichtungen, in denen derartige Verfahren durchgeführt werden,
handelt es sich um sogenannte Injektionsmischköpfe oder Hochdruckmischköpfe, in die die Kunststoffkomponenten mit einem Druck von über 100 bar
eingespritzt bzw. eingedüst werden. Die Mischvorrichtungen oder Mischköpfe sind in den unterschiedlichsten Ausgestaltungen bekannt. Es gibt
Mischvorrichtungen, die sehr einfach aufgebaut sind und die nur aus einer
Mischkammer und Einspritzdüsen oder Einspritzventilen bestehen, die die
Strömung der Komponenten in die Mischkammer freigeben oder unterbrechen.
Die Qualität der erzeugten Mischung und damit des entsprechenden Produktes ist bei derartigen einfach aufgebauten Mischvorrichtungen nicht
hoch. Die Mischvorrichtungen sind daher normalerweise mit einem sog.
Rücklauf versehen, der die Komponenten getrennt voneinander zu Vorratsbehältern zurückleitet, wenn nicht gemischt wird, d.h. wenn ein Eintritt
der Komponenten in die Mischkammer nicht stattfindet. Die Steuerung der
Komponentenströme entweder in die Mischkammer zum Mischen oder in den
Rücklauf kann durch die Einspritzventile selbst vorgenommen werden. Wenn
eine Mischung erwünscht ist, werden die Einspritzventile geöffnet, so daß
die Komponenten in die Mischkammer eintreten können. Wenn die Mischung
unterbrochen werden soll, werden die Einspritzventile geschlossen und die
Komponenten werden in den Rücklauf gefördert.

Eine in besonderer Weise ausgestaltete Mischvorrichtung ist nun zusätzlich mit einem Ausstoßkolben ausgerüstet, der in seinem Querschnitt
demjenigen der Mischkammer entspricht. Dieser Ausstoßkolben ist in der
Mischkammer hin- und herbewegbar. Er hat zwei Aufgaben, nämlich die
Reinigung der Mischkammer nach jedem Mischvorgang und das Verschließen
der Eintrittsöffnungen. In diesem Fall übernimmt der Ausstoßkolben auch
eine Ventilfunktion. In die Eintrittsöffnungen für die Komponenten können
dann spezielle Einspritzdüsen eingesetzt werden, die eine gute Mischwirkung ermöglichen. Diese Düsen haben dann keine Ventilwirkung mehr,
sondern sie verbessern das Mischen durch eine entsprechende hohe Energieumsetzung der Komponenten beim Eintreten in die Mischkammer. Bei einer
noch weiter entwickelten Mischvorrichtung ist der Ausstoßkolben mit Rücklaufnuten versehen, so daß die Komponenten auch in der Schließstellung des Ausstoßkolbens über die Eintrittsöffnungen bzw. die Einspritzdüsen in den Rücklauf gefördert werden, da die Rücklaufnuten in dem
Ausstoßkolben stromabwärts von den Eintrittsöffnungen bzw. Einspritzdüsen
sitzen (DT-PS 20 07 935 entsprechend US-PS 3 706 515). Grundsätzlich
tritt bei den eingangs geschilderten Mischvorrichtungen, unabhängig von
ihrer speziellen konstruktiven Ausgestaltung, ein bestimmtes Problem auf,
das mit dem hohen Druck zusammenhängt, mit dem die Komponenten gefördert
werden. Vor Beginn eines Schusses, d.h. eines Mischvorganges, werden die
Komponenten mit einem Druck von bis zu 250 bar gefördert, bei den Vorrichtungen mit Rücklauf durch die entsprechenden Rücklaufleitungen zurück
zu den Vorratsbehältern. Wenn nun der Eintritt in die Mischkammer freigegeben wird, so treten Druckänderungen und -schwankungen auf. Dies gilt
auch für den Fall, daß ein Ausstoßkolben vorgesehen ist, der eine Ventilfunktion hat und in dem gegebenenfalls auch Rücklaufnuten ausgebildet
sind. Beim Freigeben der Eintrittsöffnungen durch den Ausstoßkolben
erfolgt meist eine Druckentlastung, da im Bereich der Austrittsöffnung
der Mischkammer normalerweise Atmosphärendruck herrscht, wenn nicht in
entsprechende geschlossene Spezialformen gespritzt wird. Beim Spritzen in
entsprechend ausgelegte geschlossene Formen oder wenn im Auslaufkanal des
Mischkopfes Drosselelemente vorhanden sind, treten auch Druckerhöhungen
beim Mischen auf. Diese sprunghaften Druckänderungen führen zu einer
"Atmung" des Leitungssystems, da sich die Bauteile wie Schläuche und
dergleichen ausdehnen und gleichzeitig die Komponenten komprimiert werden. Auch ist die Ausstoßmenge der Pumpe in einem bestimmten Bereich
druckabhängig, d.h. die Leckverluste in der Pumpe nehmen bei höherem
Druck zu. All diese durch Druckänderungen bedingten Probleme beeinflussen
die Dosierung der Komponenten und damit das Mischungsverhältnis und das
Mischergebnis sowie das Endprodukt. Sie sind in ihrem Ergebnis im voraus
nicht berechenbar.

Der Erfindung liegt daher die Aufgabe zugrunde, eine Vorrichtung der
eingangs genannten Art zu schaffen, bei der der Komponentendruck in der
Kreislaufphase, insbesondere vor Beginn des Mischens (Schuß) und während
dieses Mischens auf einem gleichen, konstanten Niveau für jede Komponente
gehalten wird, um damit die Gemischqualität zu verbessern.

Diese Aufgabe wird grundsätzlich durch das Kennzeichen des Anspruches 1
gelöst.

Dadurch, daß eine entsprechende Einrichtung vorhanden ist, die in dem
Teil der Leitung für jede Komponente angeordnet ist und sowohl während
der Kreislaufförderung als auch während des Mischens durchströmt wird, ist sichergestellt, daß vor Beginn einer Mischung bereits der Druck eingestellt wird, der während des Mischens herrschen soll. Hierdurch werden sprunghafte Druckänderungen und Druckschwankungen vermieden, so daß es zu einer gleichmäßigen Dosierung kommt und die Mischqualität durch Druckschwankungen nicht beeinflußt wird.

In vorteilhafter Weise ist die Einrichtung zur Konstanthaltung des Druckes in unmittelbarer Nähe der zugehörigen Eintrittsöffnung angeordnet.

In den Ansprüchen 3 bis 8 sind verschiedene konstruktive Ausgetaltungen unter Schutz gestellt.

Eine vorteilhafte konstruktive Ausgestaltung der Erfindung weist für jede Komponente Einspritzdüsen oder Einspritzventile auf, deren Ventilkörper als Nadel ausgebildet ist. Bei bekannten Vorrichtungen haben diese Einspritzdüsen oder Einspritzventile unterschiedliche Aufgaben. Entweder sorgen sie für ein Zerstäuben der Komponenten beim Eintreten oder sie sind im wesentlichen Ventile, die entweder geschlossen sind und damit einen Eintritt der Komponenten in die Mischkammer verhindern, oder sich in Mischstellung befinden. Es sind auch schon Mischvorrichtungen mit Einspritzventilen bekanntgeworden, deren Ventilkörper sich über die Dauer der Füllzeit verstellen lassen, um dadurch Einfluß auf die eingspritzte Komponentenmenge zu nehmen. Dieses geschieht, um der zunehmenden Verkleinerung des Volumens in der zu füllenden Form Rechnung zu tragen und dadurch Lufteinschlüsse und dergleichen, insbesondere gegen Ende des Füllvorganges, zu verhindern. Wenn die Form sich gegen Ende des Füllvorganges füllt, wird das Ventil zwangsweise weiter geschlossen. Hierzu ist es erforderlich, im voraus bestimmte Erfahrungswerte festzulegen, nach denen dann der Einspritzquerschnitt der Einspritzdüsen während des Mischens verändert wird. Es läuft also eine Art Programm ab, das im voraus eine Zwangssteuerung festlegt (EP-PS 0024608).

Wenn die Einspritzdüse, d.h. deren vorzugsweise als Nadel ausgebildeter Ventilkörper, die Konstanthaltung des Druckes selbst übernimmt, so wird auf diesen Ventilköprer eine konstante Kraft ausgeübt, die damit die Druckhöhe festlegt. Steigt der Druck der Komponente an, so öffnet sich der Ventilkörper gegen die auf ihn wirkende konstante Kraft weiter, und der Druckanstieg wird kompensiert, d.h. er findet praktisch nicht statt. Die Veränderung dieses Druckes kann in einfacher und praktischer Weise durch ein entfernt liegendes Druckregelventil erfolgen. Damit ist eine Fernsteuerung der Düsen, d.h. im Endeffekt des konstanten Druckes, mit dem die Komponenten in die Mischkammer eintreten, ohne weiteres verwirklicht.

O.Z. 0505./02059

**0143926**

Grundsätzlich kann die Kraft zur Erzeugung des konstanten Druckes mechanisch, beispielsweise durch entsprechend ausgestaltete Federn, hydraulisch, pneumatisch, elektrisch oder elektromagnetisch aufgebracht werden. Es ist wichtig, daß bei Wegänderung keine nennenswerte Kraftänderung, beispielswiese durch die Progression der Feder, auftritt. Aus diesem Grunde wird eine hydraulische Krafterzeugung vorgezogen.

Anstelle der unmittelbaren Einwirkung auf den Ventilkörper einer entsprechend ausgestalteten Einspritzdüse, ist es auch möglich, unmittelbar vor dem Eintritt einen Drosselkolben in jeder Komponentenleitung vorzusehen, auf den wiederum eine entsprechende Einrichtung zur Erzeugung einer konstanten Kraft einwirkt. Wenn eine derartige Lösung mit Drosselkolben vorgezogen wird, ist die Ausgestaltung der Einspritzöffnung bzw. der Einspritzdüse hiervon unabhängig. Verfahrenstechnisch bedeutet dies, daß die Einspritzgeschwindigkeit der Komponenten in die Mischkammer konstant gehalten werden kann, was sich in manchen Fällen vorteilhaft auf das Mischergebnis auswirkt. Auch in diesem Falle wird aber nach der Erfindung sichergestellt, daß die Komponenten mit konstantem Druck gefördert werden.

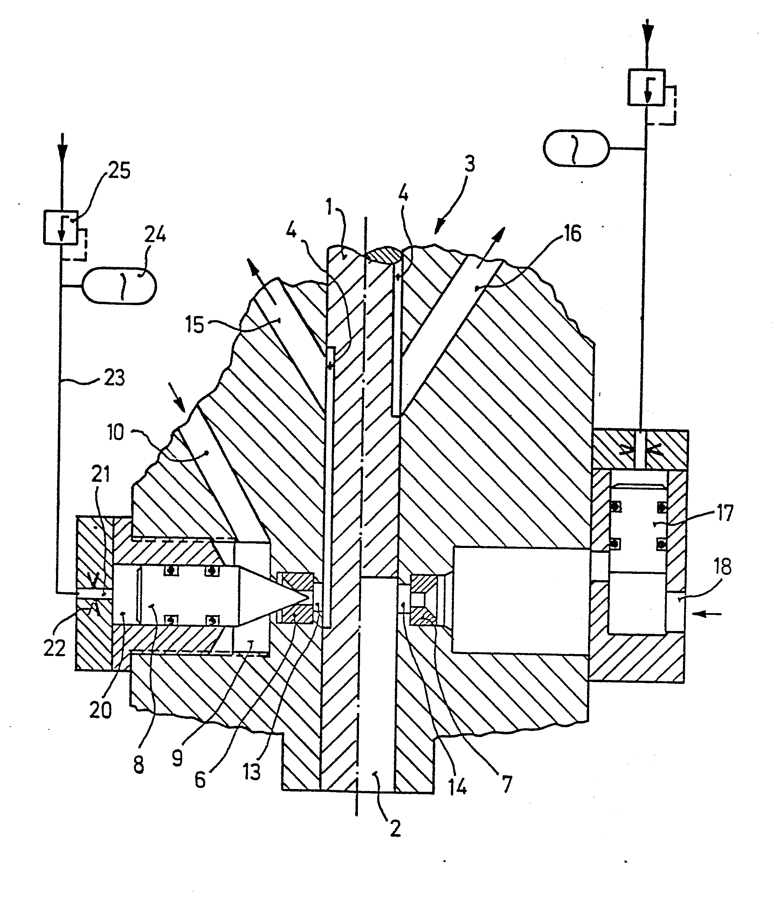

Im folgenden wird die Erfindung unter Hinweis auf die Zeichnung näher erläutert.

In der einzigen Figur ist ein Mischkopf (in zwei Stellungen und in zwei verschiedenen Ausführungsformen) in seinem vorderen Teil, d.h. im Bereich der Mischkammer und der Einspritzdüsen, schematisch dargestellt. Das Mischkopfgehäuse ist mit 3 bezeichnet. Eine Bohrung in dem Mischkopfgehäuse bildet die Mischkammer 2, in der ein Ausstoßkolben 1 mit Rücklaufnuten 4 hin- und herbewegbar ist. Der hydraulische Teil dieses Ausstoßkolbens ist nicht gezeigt, da er allgemein bekannt ist.

In den Bereich der Mischkammer führen Eintrittsöffnungen 13 und 14 für zwei Komponenten. Wenn mehrere Komponenten vermischt werden sollen, ist eine größere Anzahl von Eintrittsöffnungen vorzusehen. Jeder Eintrittsöffnung ist eine Einspritzdüse 6, 7 zugeordnet. Diese Einspritzdüsen sind grundsätzlich gleich ausgebildet, so daß gleiche Teile mit gleichen Bezugszeichen versehen sind.

Die Einspritzdüse 6 ist mit einem Ventilkörper 8 versehen, der auch als Nadel bezeichnet werden kann. Um jedes Ventil 6 ist ein Ringraum 9 vorgesehen, der sowohl während der Kreislaufförderung der Komponenten durch die Rücklaufnut 4 als auch während des Mischens durchströmt wird. Dieser

0.Z. 0505/02059

**0143926**

Ringraum ist mit einer Vorlaufleitung 10 für die entsprechende Komponente verbunden. Angrenzend an jede Eintrittsöffnung ist ein entsprechend ausgebildeter Ventilsitz vorgesehen.

Weiterhin führen in das Mischkopfgehäuse 3 zwei Rücklaufleitungen 15 und 16.

Jeder Ventilkörper 8 weist auf dem der zugehörigen Eintrittsöffnung abgelegenen Ende einen Druckraum 20 auf, in dem eine konstante Kraft zur Verfügung gestellt wird. In diesen Druckraum führt eine Leitung 21, in der ein Drosselventil 22 angeordnet ist. Eine Leitung 23 ist über einen Speicher 24 mit einer Pumpe verbunden. Das entsprechende Druckregelventil ist mit 25 bezeichnet.

Vor Beginn eines Schusses, d.h. eines Mischvorganges, befindet sich der Ausstoßkolben in der in der Zeichnung auf der linken Seite dargestellten Stellung. Die Komponenten treten in den entsprechenden Ringraum 9 der Einspritzdüsen ein und strömen von dort bei geöffneten Ventilen mit dem eingestellten Druck in die Rücklaufnuten 4 und durch diese in die Rücklaufleitungen 15 und damit zurück zu den Komponentenbehältern.

Wenn nun der Ausstoßkolben 1 in die rechts dargestellte Stellung bewegt wird, wird der Komponentenstrom in die Mischkammer 2 freigegeben und gleichzeitig die Strömung in die Rücklaufleitungen unterbrochen.

Dadurch, daß in dem Druckraum 20 der Kolben- und Zylindereinheit ein bestimmter Druck aufrechterhalten wird, befindet sich der Ventilkörper 8 immer in einer entsprechenden Stellung. Steigt der Druck in der Komponentenleitung an, wird der Ventilkörper weiter in Offenstellung bewegt und umgekehrt.

Die Drossel 22 verhindert unerwünschte Schwingungen.

Wenn der Ausstoßkolben mit seinem vorderen Ende bei der Bewegung von der Kreislauf- in die Mischstellung, die Eintrittsöffnungen 13 und 14 überfährt, ändern sich die Stauwiderstände und damit die Drücke, weil die Überströmnut und Rücklaufleitung einerseits und der Auslaufkanal des Mischkopfes und ggf. der Angußkanal einer Form andererseits geometrisch unterschiedlich sind. Diese Druckänderung wird dadurch kompensiert, daß der Ventielköprer 8 weiter in Schließstellung umgekehrt bewegt wird und somit für einen konstanten Druck in der Vorlaufleitung sorgt. Hierdurch erfolgt eine gleichmäßige Dosierung und gleichzeitig wird ein entsprechend günstiger Einfluß auf das Mischergebnis erreicht.

Die Erfindung berücksichtigt also sämtliche Umstände, die den Druck in
der Vorlaufleitung negativ beeinflussen.

Bei der anderen, in der Zeichnung rechts gezeigten Ausführungsform, wirkt
die Einrichtung zur Erzeugung einer konstanten Kraft nicht unmittelbar
auf den Ventilkörper einer Einspritzdüse ein. In diesem Falle ist möglichst in der Nähe der Einspritzöffnungen, die durch eine Blende gebildet
ist, ein Drosselkolben 17 in jede Komponentenleitung 18 eingebaut. Dieser
Drosselkolben hält den Druck in der Komponentenzuführung dadurch konstant, daß auf ihn eine hydraulische Kraft wirkt, die durch eine Einrichtung zur Verfügung gestellt wird, die der Einrichtung 20 bis 25 der
linken Ausführungsform entspricht.

Patentansprüche

1. Vorrichtung zum Mischen von mindestens zwei reaktionsfähigen Kunststoffkomponenten, insbesondere polyurethanbildenden Komponenten, mit
einer Mischkammer (2), die Eintrittsöffnungen (13, 14) für die einzelnen Kunststoffkomponenten und eine Austrittsöffnung für das Komponentengemisch aufweist, wobei die Komponenten bei verschlossenen
Eintrittsöffnungen in einem Kreislauf (Rücklauf) zurück zu Komponentenbehältern strömen, gekennzeichnet durch eine Einrichtung in
jeder von den Komponenten sowohl während des Kreislaufes zurück zu
den Komponentenbehältern als auch während der Mischung durchströmten
Leitungen, die den Druck jeder Komponente auf einem konstanten Wert
hält.

2. Vorrichtung nach Anspruch 1, dadurch gekennzeichnet, daß die Einrichtung zur Konstanthaltung des Druckes im Bereich jeder Eintrittsöffnung (13, 14), insbesondere unmittelbar vor dieser angeordnet ist.

3. Vorrichtung nach Anspruch 1 oder 2, dadurch gekennzeichnet, daß die
Einrichtung zur Konstanthaltung des Druckes durch entsprechende
Einspritzdüsen gebildet ist, deren Ventilkörper oder Düsennadel (8)
durch eine konstante Kraft beaufschlagt wird.

4. Vorrichtung nach Anspruch 1 oder 2, dadurch gekennzeichnet, daß die
Einrichtung zur Konstanthaltung des Druckes durch einen vor jeder
Eintrittsöffnung (13, 14) in der Komponentenleitung angeordneten
Drosselkolben (17) gebildet ist, der durch eine konstante Kraft
beaufschlagt wird.

5. Vorrichtung nach Anspruch 3 oder 4, dadurch gekennzeichnet, daß die
Kraft einstellbar ist.

6. Vorrichtung nach Anspruch 3, 4 oder 5, dadurch gekennzeichnet, daß
die Kraft mechanisch, hydraulisch, pneumatisch, elektrisch oder
elektromagnetisch erzeugt wird.

7. Vorrichtung nach einem der vorstehenden Ansprüche, dadurch gekennzeichnet, daß in der Mischkammer (2) in an sich gekannter Weise ein
querschnittsgleicher Ausstoßkolben (1) hin- und herbewegbar ist, der
aus einer die Eintrittsöffnungen (13, 14) offenlassenden Mischstellung bis in den Bereich der Austrittsöffnung - dabei die Eintrittsöffnungen gegenüber der Mischkammer absperrend - hin- und
herbewegbar ist.

0143926

8. Vorrichtung nach Anspruch 7, <u>dadurch gekennzeichnet</u>, daß der Kreislauf zurück zu den Vorratsbehältern durch Rücklaufnuten (4) erfolgt,
   die in an sich bekannter Weise in dem Ausstoßkolben (1) ausgebildet
   sind.

Zeichn.